# EUROPÄISCHE PATENTSCHRIFT

(11) **EP 3 740 408 B1**
(45) Veröffentlichungstag und Bekanntmachung des Hinweises auf die Patenterteilung: **10.05.2023**
(21) Anmeldenummer: 19710305.4
(22) Anmeldetag: 25.02.2019
(51) Int. Cl.: B61D 17/04, B61D 17/12

(54) **WAGENKASTEN FÜR EIN SCHIENENFAHRZEUG**
CAR BODY FOR A RAILWAY VEHICLE
CAISSE DE VEHICULE FERROVIAIRE

(30) Priorität: 27.02.2018 AT 501702018
(43) Veröffentlichungstag der Anmeldung: 25.11.2020
(73) Patentinhaber: Siemens Mobility Austria GmbH, 1210 Wien (AT)
(72) Erfinder: BEHRENDT, Lars, 1080 Wien (AT); SCHANDL, Gerhard, 4060 Leonding (AT); WIESINGER, Josef, 2191 Gaweinstal (AT)
(74) Vertreter: Siemens Patent Attorneys
(86) Internationale Anmeldenummer: PCT/EP2019/054625
(87) Internationale Veröffentlichungsnummer: WO 2019/166378

(56) Entgegenhaltungen:
- CN-A- 103 128 537
- GB-A- 284 480
- US-A- 372 615
- US-A- 546 544
- US-A- 751 436

## Beschreibung

Wagenkasten für ein Schienenfahrzeug.

### Technisches Gebiet

Die Erfindung betrifft einen Wagenkasten für ein Schienenfahrzeug.

### Stand der Technik

Wagenkästen von Schienenfahrzeugen können zu Schwingungen angeregt werden, welche sich in einer Vielzahl unterschiedlicher Moden und Frequenzen ausbilden. Dabei sind sehr niederfrequente Schwingungen dafür verantwortlich, dass der Fahrkomfort für Passagier beeinträchtigt ist. Diese Schwingungen weisen typischerweise eine Frequenz kleiner als 10 Hz auf und können somit nicht gehört sondern nur gefühlt werden. Moderne Schienenfahrzeug werden nach den Prinzipien des Leichtbaus entweder in Leichtmetall Integralbauweise oder in Differentialbauweise aus Stahl gebaut. Diese Leichtbauweise fördert das Ausbilden von niederfrequenten Schwingungsmoden. Zur Verhinderung dieser Schwingungen könnte ein Wagenkasten mit einer höheren globalen Steifigkeit aufgebaut werden, was allerdings zu einer höheren Masse führt und daher unerwünscht ist. Als weitere Abhilfe könnten Querverstärkungen, beispielsweise in Form von Schottwänden eingebaut werden. Diese Lösung würde jedoch die Gestaltungsfreiheit des Passagierraums massiv einschränken und die aktuell häufig geforderten Großraumwagen unmöglich machen. Eine weitere Abhilfe ist auch eine Verstärkung des Wagenkastens im Dachbereich, wenn verkleinerte Schottwände nur im Dachbereich angeordnet werden und diesen dadurch versteifen. Solcherart kann der Passagierraum weiterhin als Großraumwagen ausgeführt werden, jedoch sind Einbauten im Dachbereich, beispielsweise für Beleuchtungen, Luftkanäle oder elektrische Einrichtungen deutlich erschwert. CN 103 128 537 A offenbart einen Wagenkasten für ein Schienenfahrzeug umfassend zwei normal zur Längsachse des Wagenkastens orientierte Zugmittel.

### Darstellung der Erfindung

Der Erfindung liegt daher die Aufgabe zugrunde, eine Möglichkeit zur Verhinderung der Ausbreitung niederfrequenter, insbesondere mit Frequenzen unterhalb des menschlichen Hörbereichs anzugeben, welche einfach und preisgünstig aufzubauen ist und welche einen geringen Platzbedarf aufweist.

Die Aufgabe wird durch einen Wagenkasten für ein Schienenfahrzeug mit den Merkmalen des Anspruchs 1 gelöst. Vorteilhafte Ausgestaltungen sind Gegenstand untergeordneter Ansprüche.

Dem Grundgedanken der Erfindung nach wird ein Wagenkasten für ein Schienenfahrzeug, umfassend ein Untergestell, Seitenwände und ein Dach aufgebaut, wobei zwischen bestimmten Punkten des Wagenkastens an der Innenseite des Wagenkastens mindestens ein Zugmittel angeordnet ist.

Dadurch ist der Vorteil erzielbar, jene Punkte des Wagenkasten zugsteif miteinander verbinden zu können, welche bei einer niederfrequenten Schwingungsmode des Wagenkastens eine Relativbewegung zueinander ausführen, wodurch diese Schwingungsmode nicht mehr auftreten kann. Ein weiterer Vorteil der Erfindung liegt darin, dass nur ein minimaler Massezuwachs durch die Zugmittel auftritt, was im Gegensatz zu verstärkenden Schottwänden vernachlässigbar ist. Erfindungsgemäß werden bestimmte Punkte des Wagenkastens an der Innenseite des Wagenkastens mit einem Zugmittel verbunden. Die Anordnung dieser Befestigungspunkte erfolgt unter Hinsicht auf die Ausprägung der zu unterdrückenden Schwingungsmoden an Stelen, welche bei dieser Schwingung eine Relativbewegung zueinander ausführen. Diese Positionen können beispielsweise mittels einer numerischen Computersimulation eines konkreten Wagenkastens ermittelt werden.

Da die Möglichkeit der Anordnung von Zugmitteln im Inneren des Wagenkastens aufgrund der Inneneinrichtung jedoch stark eingeschränkt ist, ist es empfehlenswert die Zugmittel im Dachbereich oberhalb der Innenverkleidung anzuordnen.

Im Allgemeinen wird eine Mehrzahl an Zugmitteln für einen Wagenkasten erforderlich sein um eine hinreichende Versteifungswirkung zu erzielen.

Erfindungsgemäß sind die Zugmittel normal zur Längsachse des Wagenkastens angeordnet. Dadurch ist eine optimale Wirkung der Versteifung des Wagenkastens erzielbar.

Erfindungsgemäß sind die Zugmittel zwischen dem Dach und dem Untergestell vorgesehen. Dies kann insbesondere dann erfolgen, wenn die Zugmittel dabei in Verkleidungsteilen des Innenausbaus oder in Griffstangen geführt und somit für die Passagiere unzugänglich und unsichtbar sind.

Da die Zugmittel im Dachbereich angeordnet sind, werden sie von den Innenausbauteilen, z.B. Dachvouten, Innenleuchten, etc. verkleidet und sind somit für die Passagiere unsichtbar.

Als Zugmittel können alle Arten von mechanischen Elementen eingesetzt werden, welche zur Übertragung von Zugkräften geeignet sind. Insbesondere können dabei Stahlseile, Carbonseile, Ketten oder Zugstangen aus Stahl oder Carbon eingesetzt werden. Besonders vorteilhaft ist dabei der Einsatz von Stahlseilen, da diese preiswert und leicht für die erforderlichen Längen konfektionierbar sind.

Die Befestigung der Zugmittel an der Innenseite des Wagenkastens erfolgt vorzugsweise mittels eines leicht lösbaren Befestigungsmittels und es kann eine Einrichtung zur Einstellung der Zugspannung, beispielsweise ein Spannschloß vorgesehen werden.

Ein besonderer Vorteil gegenständlicher Erfindung besteht darin, dass die Zugmittel jederzeit wieder ausgebaut werden können ohne die Stabilität des Wagenkastens zu beeinträchtigen. Beispielsweise können bei Wartungen oder Umbauten im Dachbereich des Innenraums die Zugmittel temporär oder auch permanent ausgebaut werden, da sie zur Festigkeit des Wagenkastens nichts beitragen sondern ausschließlich der Unterdrückung bestimmter Schwingungsmoden dienen. Dadurch kann auch der Einbau zu jedem beliebigen, für den Fertigungsablauf vorteilhaften Zeitpunkt erfolgen.

In weiterer Fortbildung der Erfindung ist es vorteilhaft, transversale Schwingungen der Zugmittel selbst zu unterdrücken. Dadurch kann verhindert werden, dass Schwingungen der Zugmittel sich in den Wagenkasten übertragen und in einem hörbaren Frequenzbereich in den Innenraum des Schienenfahrzeugs abgestrahlt werden. Dazu können beispielsweise energieverzehrende Dämpfungselemente an den Zugmitteln angeordnet werden oder die Zugmittel entlang ihres Verlaufs an wenigstens einer Stelle über ein energieverzehrendes Element mit dem Wagenkasten verbunden werden, wodurch die transversalen Schwingungen im Wesentlichen verhindert werden.

### Kurzbeschreibung der Zeichnungen

Es zeigen beispielhaft:
**Fig.1** Wagenkasten - Schwingungssimulation.
**Fig.2** Wagenkasten mit Zugmitteln.

### Ausführung der Erfindung

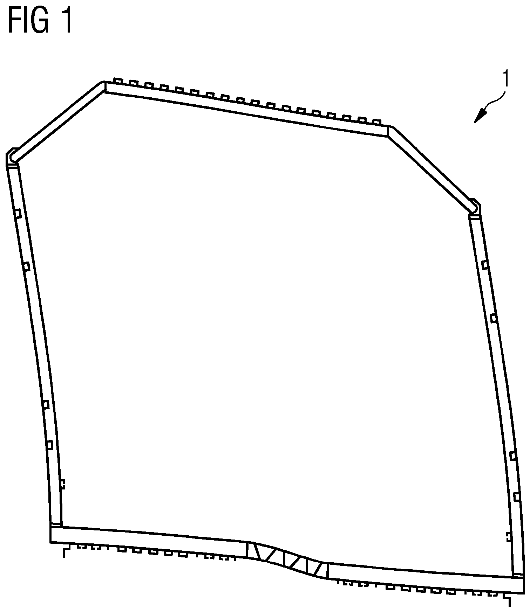

**Fig.1** zeigt beispielhaft und schematisch eine numerische Schwingungssimulation eines Wagenkastens 1. Es ist ein Schnitt normal zur Längsachse des Wagenkastens 1 mit stark überhöhter Amplitude dargestellt. Die dargestellte Schwingungsmode weist eine Frequenz < 10Hz auf und würde unbedämpft den Fahrkomfort deutlich mindern. Die Ausprägung dieser Schwingung könnte, wie aus Fig.1 ersichtlich, am besten mittels einer X-förmigen Aussteifung des Wagenkastens erfolgen, da dabei jene Punkte verbunden würden, welche während dieser Schwingung die größten Abstandsveränderungen zueinander ausführen. Eine solche X-förmige Aussteifung ist bei Großraumschienenfahrzeugen naturgemäß nicht umsetzbar.

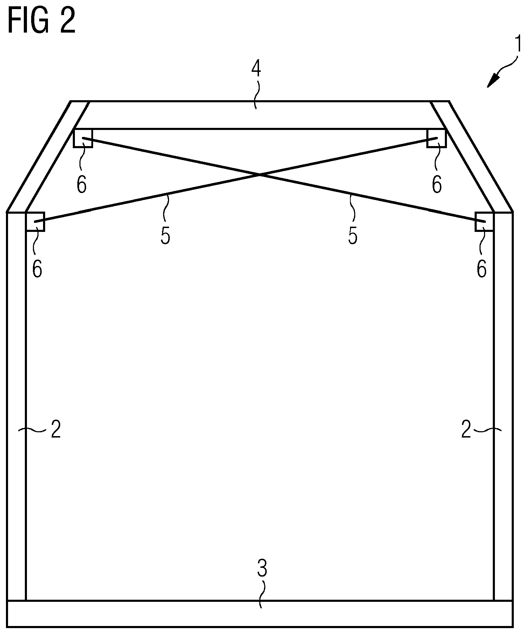

**Fig.2** zeigt beispielhaft und schematisch einen Wagenkasten mit Zugmitteln. Es ist ein Schnitt durch einen Wagenkasten 1 normal zu seiner Längsachse dargestellt. Der Wagenkasten 1 umfasst zwei Seitenwände 2, ein Untergestell 3 und ein Dach 4. Der Wagenkasten 1 ist mit Befestigungspunkten 6 im Dachbereich oberhalb des Passagierbereichs ausgestattet, an welchen Zugmittel 5 zur jeweils gegenüberliegenden Seite des Wagenkastens 1 verlaufen. Es sind zwei Zugmittel 5 vorgesehen, welche spiegelbildlich angeordnet sind und die Dachstruktur so versteifen, dass niederfrequente Eigenschwingungen des Wagenkastens 1 weitgehend unterdrückt werden.

### Liste der Bezeichnungen

- 1: Wagenkasten
- 2: Seitenwand
- 3: Untergestell
- 4: Dach
- 5: Zugmittel
- 6: Befestigungspunkt

## Patentansprüche

1. Wagenkasten (1) für ein Schienenfahrzeug, umfassend ein Untergestell (3), Seitenwände (2) und ein Dach (4),
**dadurch gekennzeichnet, dass**
zwischen bestimmten Punkten des Wagenkastens (1) an der Innenseite des Wagenkastens (1) im Dachbereich mindestens zwei, normal zur Längsachse des Wagenkastens (1) orientierte Zugmittel (5) spiegelbildlich angeordnet sind und die Dachstruktur so versteifen, dass niederfrequente Eigenschwingungen des Wagenkastens (1) weitgehend unterdrückt werden.

2. Wagenkasten (1) für ein Schienenfahrzeug nach Anspruch 1,
**dadurch gekennzeichnet, dass** das mindestens eine
Zugmittel (5) von einer Verkleidung umgeben ist.

3. Wagenkasten (1) für ein Schienenfahrzeug nach einem der Ansprüche 1 oder 2,
**dadurch gekennzeichnet, dass** das mindestens eine
Zugmittel (5) mit einer Einrichtung zur Dämpfung der transversalen Schwingung des Zugmittels (5) ausgestattet ist.

4. Wagenkasten (1) für ein Schienenfahrzeug nach einem der Ansprüche 1 bis 3,
**dadurch gekennzeichnet, dass** das mindestens eine
Zugmittel (5) als Stahlseil ausgeführt ist.

## Claims

1. Car body (1) for a railway vehicle, comprising a chassis (3), side walls (2) and a roof (4),
**characterised in that**
at least two traction mechanisms (5) aligned at right angles to the longitudinal axis of the car body (1) are arranged laterally reversed between specific points of the car body (1) on the interior of the car body (1) in the roof area and reinforce the roof structure so that low-frequency natural oscillations of the car body (1) are largely suppressed.

2. Car body (1) for a rail vehicle according to claim 1, **characterised in that** the at least one traction mechanism (5) is surrounded by a cladding.

3. Car body (1) for a rail vehicle according to one of claims 1 or 2,
**characterised in that** the at least one traction mechanism (5) is equipped with a facility for dampening the transversal oscillation of the traction mechanism (5).

4. Car body (1) for a rail vehicle according to one of claims 1 to 3,
**characterised in that** the at least one traction mechanism (5) is designed as a steel cable.

## Revendications

1. Caisse (1) pour un véhicule ferroviaire, comprenant un châssis inférieur (3), des parois latérales (2) et un toit (4),
**caractérisée en ce que**
entre certains points de la caisse (1) au niveau de la face intérieure de la caisse (1) dans la zone de toit au moins deux moyens de traction (5) orientés verticalement par rapport à l'axe longitudinal de la caisse (1) sont disposés de manière symétrique et raidissent la structure de toit de sorte que des auto-oscillations à basse fréquence de la caisse (1) sont largement supprimées.

2. Caisse (1) pour un véhicule ferroviaire selon la revendication 1,
**caractérisée en ce qu'**au moins un moyen de traction (5) est entouré par un revêtement.

3. Caisse (1) pour un véhicule ferroviaire selon l'une quelconque des revendications 1 ou 2,
**caractérisée en ce que** l'au moins un moyen de traction (5) est équipé d'un équipement pour l'amortissement de l'oscillation transversale du moyen de traction (5).

4. Caisse (1) pour un véhicule ferroviaire selon l'une quelconque des revendications 1 à 3,
**caractérisée en ce que** l'au moins un moyen de traction (5) est réalisé en tant que câble en acier.
